# EUROPÄISCHE PATENTSCHRIFT

(11) **EP 2 247 539 B1**
(45) Veröffentlichungstag und Bekanntmachung des Hinweises auf die Patenterteilung: **28.09.2011**
(21) Anmeldenummer: 09712043.0
(22) Anmeldetag: 19.02.2009
(51) Int. Cl.: C02F 3/32, C02F 1/00, C02F 103/42

(54) **WASSEREINLEITUNGSANORDNUNG**
WATER INTRODUCING ARRANGEMENT
SYSTÈME D'AMENÉE D'EAU

(30) Priorität: 22.02.2008 AT 3042008
(43) Veröffentlichungstag der Anmeldung: 10.11.2010
(73) Patentinhaber: Aquaviva GmbH, 4320 Perg (AT)
(72) Erfinder: KLEMENT, Arnold, A-8501 Lieboch (AT)
(74) Vertreter: Gibler & Poth Patentanwälte OG
(86) Internationale Anmeldenummer: PCT/AT2009/000068
(87) Internationale Veröffentlichungsnummer: WO 2009/103103

(56) Entgegenhaltungen:
- EP-A- 1 038 435
- EP-A- 1 479 655
- DE-A1- 4 226 660
- DE-A1- 19 640 347
- US-A- 5 618 413
- US-B1- 6 740 232

## Beschreibung

Die Erfindung betrifft eine Wassereinleitungsanordnung zur Wassereinleitung in einen Bodenfilter einer Gewässeranordnung gemäß dem Oberbegriff des Patentanspruches 1. Wassereinleitungsanordnungen zur Wassereinleitung in den Bodenfilter der Gewässeranordnung sind bekannt, wobei mittels der Wassereinleitungsanordnung die Einleitung des zu reinigenden Wassers in den Bodenfilter der Gewässeranordnung erfolgt, womit die Wassereinleitungsanordnung insbesondere als Bodenfilterwassereinleitungsanordnung bezeichnet werden kann.

Die Gewässeranordnung versteht man in diesem Zusammenhang ein künstlich angelegtes stehendes Gewässer, welches einen Nutzungsbereich und einen zum Nutzungsbereich zumindest teilweise abgetrennten Filterbereich aufweist, wobei der Nutzungsbereich insbesondere zum darin Schwimmen und wobei der Filterbereich zum Filtern des Wassers des stehenden Gewässers vorgesehen ist.

Das stehende Gewässer kann dabei natürlich wirkend, insbesondere als Gartenteich, als Schwimmteich oder als Beckenanordnung, insbesondere als Schwimmbeckenanordnung, ausgebildet sein. Zur Erreichung des natürlichen Eindrucks kann das Schwimmbecken zumindest bereichsweise einen durch Schotter und/oder Kies ausgebildeten Untergrund aufweisen. Das stehende Gewässer kann insbesondere in privaten Gärten, aber auch in kommunalen Einrichtungen, vorgesehen sein. Weiters kann das stehende Gewässer auch für andere Nutzungen als dem darin Schwimmen, beispielsweise für die Nutzung als Fischteich, als Gartenbiotop, als Zierteich und/oder als Springbrunnen, vorgesehen sein und wobei der Nutzung entsprechende Nutzungs- und Filterbereiche in dieser Gewässeranordnung ausgebildet sind.

Die Gewässeranordnung kann auch als Teich ausgebildet sein, welcher sowohl den Nutzbereich als den Filterbereich umfasst, wobei der Bereich zum Filtern zumindest teilweise durch eine wasserundurchlässige Wand vom Nutzbereich abgetrennt ist. Die wasserundurchlässige Wand trennt dabei den Bodenfilter vom Nutzbereich ab, womit sowohl der Bodenfilter als auch der Nutzbereich in einer beckenförmigen Ausnehmung angeordnet sind.

Der zweite Bereich umfasst einen Bodenfilter, welcher zum Filtern und zum Reinigen von zu filterndem Wasser aus dem ersten Bereich, also aus dem Nutzbereich, vorgesehen ist.

Der Bodenfilter umfasst im Bereich des Bodenfilterbeckenbodens eine Verteilschicht zum Verteilen des in den Bodenfilter eingeleiteten Wassers und eine darüberliegende Filterschicht zur Filterung und Reinigung des durch den Bodenfilter durchtretenden Wassers, wobei die Durchströmung des Bodenfilters von unten nach oben erfolt. Der Bodenfilter kann mit oder ohne Wasserpflanzen ausgebildet sein.

In die Verteilschicht wird das zu filternde Wasser eingeleitet, welches hiezu aus dem Nutzbereich abgesaugt wurde. Die Verteilschicht kann dazu insbesondere im Wesentlichen aus grobkörnigem Material, insbesondere Gesteinsmaterial, bevorzugt Kies und/oder Schotter, ausgebildet sein.

Die Filterschicht, welche insbesondere im Wesentlichen aus feinkörnigem Material, insbesondere Sand, Schluff und/oder Ton ausgebildet ist, dient als Träger für einen Biofilm. Der Biofilm lagert sich am feinkörnigen Material an und umfasst Bakterien und/oder Mikroben, welche Nährstoffe insbesondere Phosphate aus dem zu reinigenden Wasser aufnehmen. Dazu steigt das Wasser von der Verteilschicht zur Filterschicht auf und tritt durch die Filterschicht durch.

Das gereinigte Wasser, welches im weiteren als Reinwasser bezeichnet wird, tritt an der Oberseite der Filterschicht aus dem Bodenfilter aus und sammelt sich oberhalb einer Oberfläche des Bodenfilters. Von dort wird das Reinwasser wieder in den Nutzbereich zurückgeleitet, womit der Wasserkreislauf geschlossen ist.

Wie weiter oben beschrieben, können der Bodenfilterbereich und der Nutzbereich in getrennten Becken oder in einem gemeinsamen Becken ausgebildet sein. Bei erster Anordnung erfolgt die Zurückleitung des Reinwassers bevorzugt mittels Rohrleitungen, oder durch einen Überlauf, beispielsweise durch einen künstlichen Wasserfall. Bei zweiter Anordnung weisen der Bereich oberhalb des Bodenfilters und der Nutzbereich eine gemeinsame Wasseroberfläche, also einen gemeinsamen Wasserspiegel auf, womit das Reinwasser in unmittelbaren Kontakt zum Wasser im Nutzbereich steht und keine gesonderte Wasserrückleitungseinrichtung erforderlich ist.

Der Durchsatz des zu filternden Wassers, welcher in Kubikmeter pro Stunde, also m³/h, gemessen werden kann, ist abhängig von dem Volumen des Nutzbereichs, insbesondere vom Volumen des Wassers, und beträgt bei Gewässeranordnungen für Einfamilienhäuser üblicherweise zwischen 2 m³/h und 25 m³/h. Bei Gewässeranordnungen für Mehrparteienhäuser und/oder gewerblich genutzten Gewässeranordnungen kann der Durchsatz bis zu 100 m³/h betragen.

Zur Gewährleistung der Filterwirkung muss die Durchströmgeschwindigkeit des Wassers durch das Volumen der Filterschicht gering sein. Nachteilig dabei ist, dass diese Durchströmgeschwindigkeit bei herkömmlichen Bodenfiltern über die Fläche, insbesondere über die Oberfläche, des Bodenfilters variiert, wobei sich die Variation der Durchströmgeschwindigkeit mit steigendem Durchsatz vergrößert. Daraus ergibt sich in nachteiliger Weise, dass die Fläche des Bodenfilters nicht gleichmäßig genutzt wird, womit der Bodenfilter flächenmäßig im Verhältnis zur Nutzbereichgröße überdimensioniert werden muss, dass die Filterpflanzen ungleichmäßig wachsen, womit ein ungleichmäßiges Erscheinungsbild des Bodenfilters bewirkt ist, und dass Bereiche der Filterschicht, in welchen eine höhere Fließgeschwindigkeit des Wassers auftritt, zu einem Auswaschen neigen, womit sich die Filterschicht mit zeitlich fortschreitendem Betrieb in Zusammensetzung und Geometrie ändert, wobei die Filterwirkung gering ist und wobei die mengenmäßig gering durchströmten Bereiche zur so genannten Nährstoffrücklösung neigen. Die Nährstoffrücklösung bezeichnet die Rücklösung von dem Wasser zuvor entzogener Nährstoffe in das zu reinigende Wasser, wie diese beim Absterben von Biofilm auftreten kann.

Aufgabe der Erfindung ist es daher, eine Wassereinleitungsanordnung der eingangs genannten Art anzugeben, mit welcher die genannten Nachteile vermieden werden können, und mit welcher der Bodenfilter im Verhältnis zum Volumen des Wassers, insbesondere zum Volumen des Wassers im Nutzbereich, mit geringer Oberfläche ausgebildet werden kann und mit welcher über einen langen Zeitraum des Betriebs des Bodenfilters hinweg ein Auswaschen der Filterschicht und die Rücklösung von Nährstoffen aus der wasserdurchströmten Filterschicht des Bodenfilters in das zu filternde Wasser minimiert, sowie eine hohe Filterwirkung gewährleistet werden kann.

Erfindungsgemäß wird dies durch die Merkmale des Patentanspruches 1 erreicht.

Dadurch ergibt sich der Vorteil, dass die Filterschicht über deren gesamte Fläche, insbesondere Oberfläche, im Wesentlichen gleichmäßig von unten nach oben durchströmt wird. Dabei ist der Flächendurchsatz, also der Durchsatz pro Flächeneinheit der Oberfläche des Bodenfilters, über im Wesentlichen die gesamte Oberfläche des Bodenfilters konstant, womit im Wesentlichen das gesamte Volumen der Filterschicht räumlich gesehen im Wesentlichen gleichmäßig durchströmt wird. Vorteilhaft dabei ist, dass im Wesentlichen die gesamte Fläche des Bodenfilters einen hohen Wirkungsgrad der Reinigungswirkung des Wassers aufweist.

Darüber hinaus kann der Bodenfilter bei einer konstanten Wasserzufuhrmenge pro Zeiteinheit auch zeitlich gleichmäßig durchströmt werden, wobei ein gleichmäßiger Wasseraustausch zwischen dem Nutzbereich und dem Bodenfilterbereich zumindest über einen vorbestimmbaren Zeitraum gewährleistet werden kann.

Vorteilhaft dabei ist, dass der Bodenfilter nicht mehr überdimensioniert gegenüber dem Nutzbereich ausgebildet sein muss, womit der Flächenbedarf für die Gewässeranordnung gering sein kann.

Durch die gleichmäßige Durchströmung kann insbesondere das Auswaschen einzelner Bereiche der Filterschicht vermieden werden. Vorteilhaft dabei ist, dass die gute Filterwirkung über einen langen Benutzungszeitraum hinweg gewährleistet sein kann und eine Verringerung der Filterwirkung vermieden werden kann. Vorteilhaft dabei ist weiters, dass die Filterschicht in Geometrie und Zusammensetzung im Wesentlichen konstant bleibt, womit die Nährstoffrücklösung aus dem Bodenfilter minimiert wird.

Aufgrund der im Wesentlichen gleichmäßigen Durchströmung der Filterschicht werden die Wurzeln der gegebenenfalls als Filterpflanzen ausgebildeten Wasserpflanzen sowie der Biofilm gleichmäßig mit Wasser umströmt, wobei auch die Nährstoffzufuhr im Wesentlichen gleichmäßig erfolgt. Dadurch ergibt sich der Vorteil, dass die Wasserpflanzen und der Biofilm im Wesentlichen im gesamten Bereich der Filterschicht des Bodenfilters ein gleichmäßiges Wachstum aufweisen können.

Die Erfindung betrifft ebenso einen Bodenfilterbereich gemäß dem Oberbegriff des Patentanspruches 14, in welcher zumindest eine erfindungsgemäße Wassereinleitungsanordnung ausgebildet ist.

Dadurch ergibt sich der Vorteil, dass mit besonders einfachen Mitteln, insbesondere mit einer einfach und kostengünstig ausgebildeten Wassereinleitungsanordnung, ein über im Wesentlichen die gesamte Oberfläche des Bodenfilters ein im Wesentlichen gleichmäßiger Durchsatz des zu filternden Wassers bewirkt ist.

Die Erfindung betrifft weiters ein Verfahren zur Wasserfilterung von Wasser einer Gewässeranordnung gemäß dem Oberbegriff des Patentanspruches 15.

Weitere Aufgabe ist es, ein Verfahren anzugeben, mit welchem die eingangs genannten Nachteile vermieden werden können, mit welchem der Bodenfilter im Verhältnis zum Volumen des Nutzbereichs mit geringer Oberfläche ausgebildet werden kann und mit welchem über einen langen Zeitraum des Betriebs des Bodenfilters hinweg ein Auswaschen der Filterschicht des Bodenfilters verhindert und eine hohe Filterwirkung gewährleistet werden kann.

Diese Aufgabe wird durch die Merkmale des Patentanspruches 17 erfüllt.

Mit dem erfindungsgemäßen Verfahren werden die eingangs genannten Vorteile und vorteilhaften Wirkungen erreicht.

Die Unteransprüche, welche ebenso wie die Patentansprüche 1 und 17 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsfomen beispielhaft dargestellt sind, näher beschrieben. Dabei zeigt:
Fig. 1 die Wassereinleitungsanordnung einer ersten bevorzugten Ausführungsform und einen Teil eines an die Wassereinleitungsanordnung angeschlossenen Wasserzulaufs schematisch in einer Aufsicht;
Fig. 2 die Wassereinleitungsanordnung der Fig. 1 und einen Teil des an die Wassereinleitungsanordnung angeschlossenen Wasserzulaufs schematisch in einer Seitenansicht;
Fig. 3 eine bevorzugte Gewässeranordnung umfassend einen als Bodenfilterbecken ausgebildeten Filterbereich und einen als Schwimmbecken ausgebildeten Nutzbereich, wobei im Bodenfilterbecken die Wassereinleitungsanordnung der Fig. 1 angeordnet ist, schematisch in einer Aufsicht;
Fig. 4 das Bodenfilterbecken einer bevorzugten Ausführungsform in einer schematischen Schnittdarstellung in einer Seitenansicht umfassend einer in der Verteilschicht des Bodenfilters angeordnete Wassereinleitungsanordnung der Fig. 1;
Fig. 5 die Wassereinleitungsanordnung einer besonders bevorzugten zweiten Ausführungsform schematisch in einer Seitenansicht;
Fig. 6 ein Detail der Wassereinleitungsanordnung der Fig. 5 im Bereich einer Wasseraustrittseinrichtung schematisch in einer Seitenansicht; und
Fig. 7 eine Explosionsdarstellung der Wassereinleitungsanordnung der Fig. 5 und schematisch den mit dieser Wassereinleitungsanordnung erwirkten Wasserfluss in einer axonometrischen Darstellung.

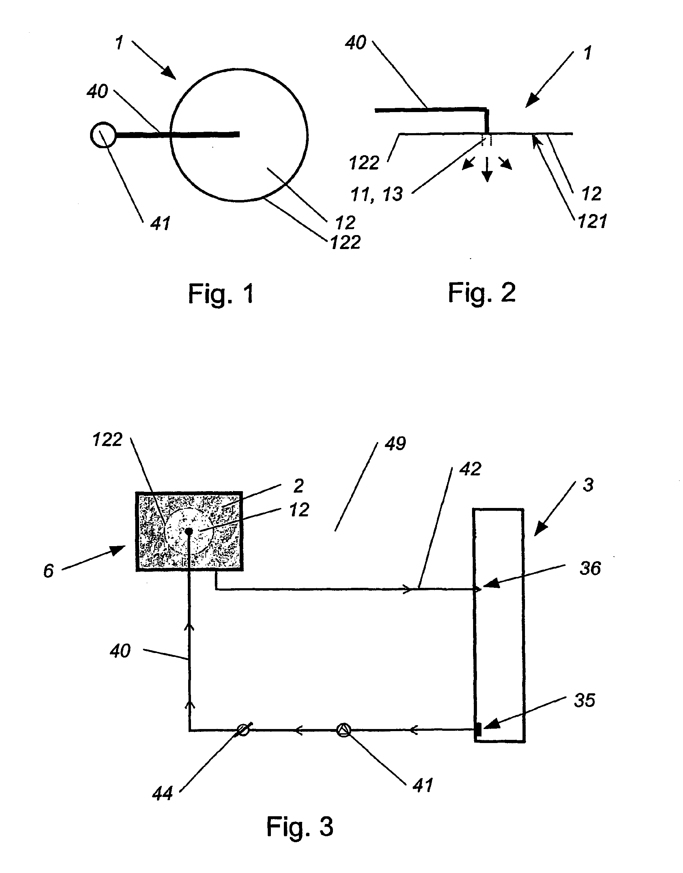

Die Fig. 1 bis 7 zeigen zumindest eine Wassereinleitungsanordnung 1, insbesondere eine Bodenfilterwassereinleitungsanordnung, zur Wassereinleitung von zu filterndem Wasser in einen Bodenfilter 2 einer Gewässeranordnung mit einem Nutzbereich 3 und einem den Bodenfilter 2 umfassenden Bodenfilterbereich 6, wobei die Wassereinleitungsanordnung 1 mit einer Wasseraustrittseinrichtung 11 ausgebildet ist, und wobei die Wasseraustrittseinrichtung 11 zumindest einen Durchbruch zur Einleitung zu filternden Wassers in eine Verteilschicht 21 des Bodenfilters 2 aufweist. Bei der Wassereinleitungsanordnung 1 ist zur im Wesentlichen gleichmäßigen Durchströmung einer Filterschicht 23 des Bodenfilters 2 vorgesehen, dass die Wassereinleitungsanordnung 1 eine, insbesondere wasserundurchlässige, Stauplatte 12 zum wenigstens bereichsweisen Umlenken des aus der Wasseraustrittseinrichtung 11 austretenden und zu filternden Wassers umfasst. Dabei wird das zu filternde Wasser in die Verteilschicht 21 eingeleitet, in welcher es sich gleichmäßig verteilt, womit an der unteren Grenzfläche der Filterschicht 23 ein im Wesentlichen konstanter Wasserdruck über die gesamte Fläche der unteren Grenzfläche der Filterschicht 23 vorherrscht. Derart kann die Filterschicht im Wesentlichen gleichmäßig und im Wesentlichen von unten nach oben durchströmt werden.

Insbesondere ergibt sich dadurch der Vorteil, dass mit besonders einfachen Mitteln, insbesondere mit einer einfach und kostengünstig ausgebildeten Wassereinleitungsanordnung, ein über im Wesentlichen die gesamte Oberfläche 28 des Bodenfilters 2 ein im Wesentlichen gleichmäßiger Durchsatz des zu filternden Wassers bewirkt ist. Somit sind mit der Wassereinleitungsanordnung 1 die eingangs genannten Vorteile und vorteilhaften Wirkungen erreicht.

Die in Fig. 1 bis Fig. 7 abgebildeten bevorzugten Ausführungsformen der Wassereinleitungsanordnung 1 ermöglichen auch ein Verfahren zur Wassereinleitung von zu filterndem Wasser der Gewässeranordnung mit dem Nutzbereich 3 und dem den Bodenfilter 2 umfassenden Bodenfilterbereich 6. Bei dem Verfahren ist vorgesehen, dass aus dem Nutzbereich 3 zu filterndes Wasser abgesaugt und in eine Verteilschicht 21 des Bodenfilters 2 im Bereich einer Wasseraustrittseinrichtung 11 einer Wassereinleitungsanordnung 1 unterhalb einer Stauplatte 12 eingeleitet wird, dass zur Verhinderung des unmittelbaren Aufsteigens des zu filternden Wassers in Richtung einer - in Betriebslage des Bodenfilters 2 gesehen oberhalb der Verteilschicht 21 angeordneten - Filterschicht 23 des Bodenfilters 2 das zu filternde Wasser an einer Unterseite 121 der Stauplatte 12 in Richtung zu einem Rand 122 der Stauplatte 12 geleitet wird, dass das zu filternde Wasser ausgehend vom Rand 122 der Stauplatte 12 zur Filterschicht 23 des Bodenfilters 2 geleitet und beim Durchtritt durch die Filterschicht 23 des Bodenfilters gereinigt wird und an einer Oberfläche 28 des Bodenfilters 2 als Reinwasser aus dem Bodenfilter 2 austritt und zurück in den Nutzbereich 3 geleitet wird. Das Verfahren ermöglicht ebenso, insbesondere wenn die erfindungsgemäße Vorrichtung mit dem Verfahren betrieben wird, die eingangs genannten Vorteile und vorteilhaften Wirkungen und ermöglicht insbesondere, dass ein Nutzbereichswasser, also das Wasser des Nutzbereichs 3, insbesondere eines befüllten Schwimmbeckens, der Gewässeranordnung einfach, biologisch sowie kostengünstig gefiltert und gereinigt, und als Reinwasser vom Bodenfilterbereich 6 zurück in den Nutzbereich 3 geleitet wird.

Unter dem Begriff "Wasser" wird die in der Natur vorkommende, mit biologischen Ausscheidungsprodukten z.B. Urin, gelösten Chemikalien z.B. Säuren, gelösten Gasen z.B. Sauerstoff und Mineralien z.B. Salz, Kleinstlebewesen z.B. Plankton, Bakterien, Insekten, Algen und vielem mehr vermengte Substanz verstanden, und nicht nur die reine chemische Verbindung H₂O.

Vorteilhafterweise kann das Wasser mittels einer zur Zuleitung von Wasser vorgesehenen Wasserzuleitung 40 zugeleitet werden, wobei das Wasser mittels einer Pumpe 41 gepumpt werden kann. Die Pumpe 41 bringt dabei bevorzugt den gesamten, für den Wasserfluss notwenigen, Pumpdruck auf.

Die Wassereinleitungsanordnung 1 ist - wie weiter oben beschrieben - zur Ausbildung in einer Gewässeranordnung vorgesehen, welche in der Fig. 3 in einer schematischen Aufsicht dargestellt ist. Bei dieser Gewässeranordnung wird das Wasser an einer Wasserabsaugung 35 aus dem Nutzungsbereich 3 abgesaugt und mittels der Pumpe 41 durch die Wasserzuleitung 40 und durch die Wassereinleitungsanordnung 1 in den im Bodenfilterbereich 6 angeordneten Bodenfilter 2 gefördert. Anschließend tritt das zu filternde Wasser als Reinwasser aus dem Bodenfilter 2 aus und wird mittels einer Rückleitung 42 zurück in den Nutzbereich 3 geleitet, wobei das Reinwasser insbesondere mittels einer Rückleitöffnung 36 in den, vorzugsweise als Innenraum des Schwimmbeckens ausgebildeten, Nutzbereich 3 zurückfließen kann. Ebenso kann das Wasser mittels einen Überlauf, beispielsweise durch einen künstlich ausgebildeten Wasserfall, in den Nutzbereich 3 zurückfließen.

Vorteilhafterweise kann in der Wasserleitung 40 wenigstens ein Absperrmittel 44 vorgesehen sein, mit welchem, beispielsweise bei Wartungsarbeiten, die Wirkverbindung zwischen dem Bodenfilterbereich 6 und dem Nutzbereich 3 trennen kann.

Die Gesamtheit der Wasserzuleitung 40, der Pumpe 41, der Rückleitung 42 und des Absperrmittels 44 kann als Wasserleitungssystem der Gewässeranordnung bezeichnet werden. Vorteilhaft an dieser Ausgestaltung der Gewässeranordnung und des Wasserleitungssystems ist, dass das Wasser der Gewässeranordnung einfach gereinigt werden kann.

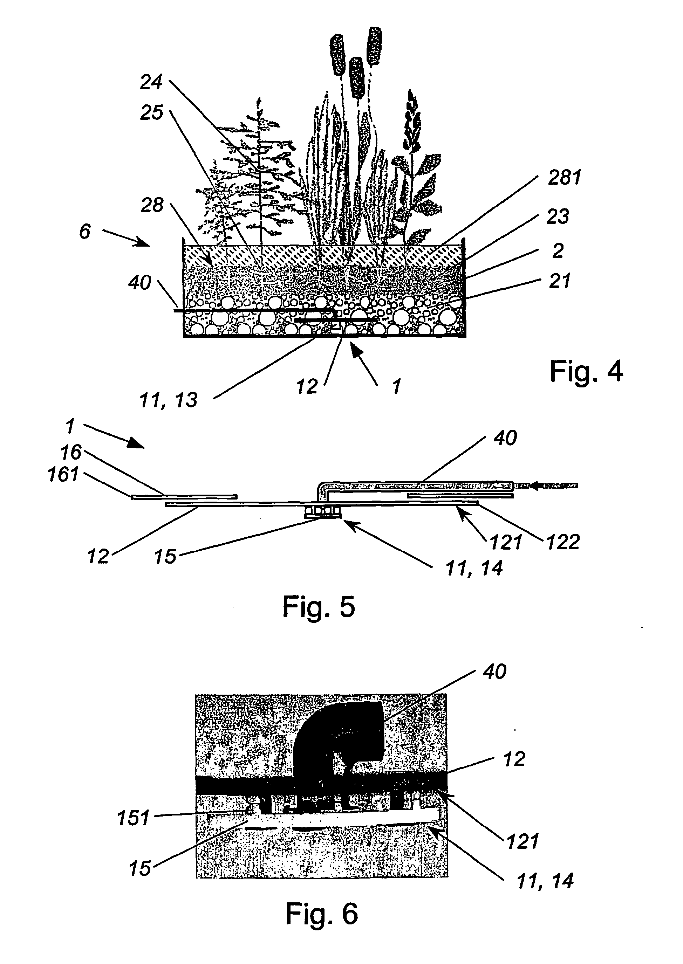

Die Gewässeranordnung ist ein künstlich zur Umgebung abgedichtetes stehendes Gewässer und kann bevorzugt durch ein oder mehrere künstlich zur Umgebung abgedichtete Becken ausgebildet sein. Die Abdichtung kann z.B. mittels einer wasserdichten Folie, welche im Boden verlegt wird, bewerkstelligt werden, wobei wenigstens ein erster Bereich der Gewässeranordnung den Nutzbereich 3, vorteilhafterweise zum Schwimmen, und wenigstens ein zweiter Bereich den Filterbereich, insbesondere den Bodenfilterbereich 6, ausbilden. Der Bodenfilterbereich 6 kann, wie in den Fig. 3 und 4 dargestellt, als Bodenfilterbecken ausgeführt sein.

Zur Abdichtung zur Umgebung können auch aus Kunststoff, Verbundwerkstoff, Metall Nirosta, Beton oder Stein gebildete Becken und/oder Wannen vorgesehen sein.

In diesem Zusammenhang können der Bodenfilterbereich 6 und der Nutzbereich 3 insbesondere in einem gemeinsamen Becken ausgebildet sein. Insbesondere kann derart ein vorteilhafter, insbesondere natürlich wirkender, Schwimmteich ausgebildet werden.

Der Bodenfilter 2, welcher in der Fig. 4 in einer schematischen Seitenansicht dargestellt ist, kann insbesondere im Wesentlichen quaderförmig ausgebildet sein, wobei die Filterschicht 23 des Bodenfilters 2 bevorzugt im Wesentlichen quaderförmig ausgebildet sein kann. Dabei umfasst der Bodenfilter 2 - in Betriebslage - die Verteilschicht 21, wobei die Verteilschicht 21 unterhalb der Filterschicht 23 angeordnet ist und wobei in der Verteilschicht 21 zumindest eine erfindungsgemäße Wassereinleitungsanordnung 1 ausgebildet ist.

Die Verteilschicht 21 umfasst grobkörniges Material, insbesondere Material mit einem Durchmesser zwischen 10mm und 150mm, bevorzugt zwischen 15mm und 40mm, insbesondere Schotter und/oder Rundkies. Die Verteilschicht 21 kann, sofern sie im Wesentlichen aus Schotter und/oder Rundkies ausgebildet ist, auch als Schotterschicht bezeichnet werden. Ebenso kann die Verteilschicht 21 Granulat, beispielsweise grobes Kunststoffgranulat, umfassen.

Dabei sind derart Lücken zwischen dem grobkörnigen Material ausgebildet, dass die Verteilschicht 21 offenporig ausgebildet ist. Dadurch kann das zu filternde Wasser gut von einer Lücke zur nächsten Lücke fließen und kann sich gut in der Verteilschicht 21 verteilen. Zwischen der Verteilschicht 21 und der Filterschicht 23 kann eine Zwischenschicht ausgebildet sein. Diese kann bevorzugt als körniges Material mit einem Durchmesser von 0,5mm bis 20mm, insbesondere Sand oder Kies, ausgebildet sein. In der Zwischenschicht kann eine Grobfilterung des zu filternden Wassers erfolgen.

Die Filterschicht 23 umfasst bevorzugt feinkörniges Material, insbesondere Erde, Schluff und/oder Sand. Aufgabe der Filterschicht 23 ist die Ausbildung eines Biofilms, welcher organisches Material, insbesondere Bakterien und/oder Mikroben, umfasst. Der Biofilm nimmt Nährstoffe, beispielsweise Phosphate, aus dem Wasser auf und bindet diese in der Filterschicht. Dabei kann der Biofilm wachsen.

In der Filterschicht 23 können weiters Wasserpflanzen 24 eingepflanzt sein, welche in der Filterschicht 23 Wurzeln 25 ausbilden. Die Wasserpflanzen 24 können ebenso Nährstoffe aus dem zu filternden Wasser aufnehmen und können die Ausbildung des Biofilms unterstützen. Vorteilhafterweise bewirkt der Bodenfilter 2 auch eine Regulierung des ph-Wertes des Wassers der Gewässeranordnung und verhindert eine Algenbildung im Wasser sowie eine Trübung des Wassers.

Bei einer weiteren, insbesondere trichterförmigen, Ausgestaltung des Bodenfilterbereichs 6 kann der Bodenfilter 2 anstatt quaderförmig auch trichterförmig, mit nach oben hin zunehmendem horizontalem Querschnitt, ausgebildet sein. Dabei kann vorteilhafterweise die Fließgeschwindigkeit des zu filternden Wassers in der Filterschicht 23 nach oben hin abnehmen, wobei weiterhin - räumlich gesehen - im Wesentlichen über den gesamten Querschnitt jeder der möglichen horizontalen Schnittflächen durch die Filterschicht 23 eine im Wesentlichen gleichmäßige Fließgeschwindigkeit des zu filternden Wassers gewährleistet sein kann.

Bei einer vorteilhaften Weiterbildung der Wassereinleitungsanordnung 1 kann vorgesehen sein, dass die Stauplatte 12 derart angeordnet ist, dass das an der Wasseraustrittseinrichtung 11 austretende zu filternde Wasser wenigstens bereichsweise entlang einer Unterseite 121 der Stauplatte 12 fließt. Eine derartige Anordnung ist in Fig. 2 in einer schematischen Seitenansicht dargestellt.

Insbesondere kann vorgesehen sein, und wie dies bei der bevorzugten ersten Ausfühnmgsform und der bevorzugten zweiten Ausführungsform der Wassereinleitungsanordnung 1 vorgesehen ist, dass die Stauplatte 12 - in Betriebslage der Wassereinleitungsanordnung 1 gesehen - oberhalb der Wasseraustrittseinrichtung 11 im Wesentlichen waagerecht angeordnet ist.

Durch die Verringerung der Fließgeschwindigkeit des zu filternden Wassers kann innerhalb der Verteilschicht 21 ein guter Druckausgleich erfolgen und das zu filternde Wasser, welches schlussendlich - da der Bodenfilter 2 nach unten und seitlich von dem Bodenfilterbereich 6 eingeschlossen ist - lediglich in Richtung der Filterschicht 23 abfließen kann, mit einem im Wesentlichen über die gesamte Fläche des Bodenfilters 2 im Wesentlichen gleichmäßigen Flächendurchsatz durch die Filterschicht 21 hindurchtreten. An der oberen Grenzfläche des Bodenfilters 2, welche als Oberfläche 28 des Bodenfilters 2 ausgebildet ist, kann das Wasser aus dem Bodenfilter 2 austreten und sich oberhalb der Oberfläche 28 als gereinigtes Wasser 281, also als Reinwasser, sammeln und von dieser Sammelstelle zum Nutzbereich 3 zurückgeleitet werden.

In diesem Zusammenhang kann die Filterschicht 23 gegebenenfalls auch schmäler, also mit geringerer Höhe ausgebildet werden. Dadurch ergibt sich der weitere Vorteil, dass der Druckverlust in der Filterschicht 23 gering gehalten werden kann, womit eine zum Bewegen des Wassers, insbesondere mittels der Pumpe 41, aufzubringende Pumpenleistung gering gehalten werden kann.

Vorteilhafterweise kann vorgesehen sein, dass die Stauplatte 12 - in Betriebslage gesehen - derart relativ zur Wasseraustrittseinrichtung 11 angeordnet ist, dass das zu filternde Wasser, bevor es zu einer oberhalb der Verteilschicht 21 angeordneten Filterschicht 23 des Bodenfilters 2 fließen kann, unterhalb einer Unterseite 121 zu einem Rand 122 der Stauplatte 12 fließt. Dadurch kann die kürzeste Wegstrecke des zu filternden Wassers von der Wasseraustrittseinrichtung 11 zur Filterschicht 23 semipermeabel oder gänzlich wasserundurchdringlich ausgebildet sein. Dadurch kann das zu filternde Wasser umgelenkt werden und länger in der Verteilschicht 21 verweilen, womit sich der Wasserdruck gut auf die gesamte Verteilschicht 21 verteilen und der Wasserdruck entlang der unteren Grenzschicht der Filterschicht 23, also am oberen Ende der Trennschicht oder der Verteilschicht 21, im Wesentlichen besonders gleichmäßig sein kann.

Insbesondere wird dabei der gleichmäßige Wasserdruck an der unteren Grenzschicht 22 der Filterschicht 23 dadurch ermöglicht, dass das Wasser unterhalb der Stauplatte 12 an einem unmittelbaren Aufsteigen in Richtung der Filterschicht 23 gehindert wird, wobei sich das zu filternde Wasser innerhalb der Verteilschicht verteilt und wobei die Fließgeschwindigkeit des aus der Wasseraustrittseinrichtung 11 austretenden zu filternden Wassers verringert wird. Dadurch kann an einer unteren Grenzschicht 22 der Filterschicht 23 der Wasserdruck des zu filternden Wassers besonders vergleichmäßigt werden, womit der Querschnitt einer horizontalen Schnittebene in der Filterschicht 23 im Wesentlichen über im Wesentlichen den gesamten Querschnitt einer horizontalen Schnittebene im Wesentlichen gleichmäßig durchströmt werden kann.

Insbesondere kann die Fließgeschwindigkeit und der Wasserdruck des zu filternden Wassers im Bereich des Randes 122 der Stauplatte 12 wesentlich geringer sein als im Bereich der Wasseraustrittseinrichtung 11. Die Fließgeschwindigkeit kann dabei durch den Volumendurchsatz pro Fläche bestimmt werden, wobei die vom zu filterndem Wasser durchsetzte Fläche im Bereich des Randes 122 der Stauplatte 12 wesentlich größer ist als im Bereich der Wasseraustrittseinrichtung 11, womit sich der Wasserdruck einfach über ein größeres Volumen vergleichmäßigen kann.

Besonders vorteilhaft kann die Wasseraustrittseinrichtung 11 - in Betriebslage der Wassereinleitungsanordnung 1 gesehen - im Wesentlichen senkrecht unterhalb der Stauplatte 12 angeordnet sein, wie dies gemäß den bevorzugten Ausführungsformen der Wassereinleitungsanordnung 1 vorgesehen ist. Das unmittelbare Aufsteigen des zu filternden Wassers zur Filterschicht 23 kann derart verhindert werden.

Ebenso kann in vorteilhafter Weise vorgesehen sein, dass - in Betriebslage der Wassereinleitungsanordnung 1 gesehen - der Schwerpunkt der Stauplatte 12 senkrecht oberhalb der Wasseraustrittseinrichtung 11 angeordnet ist, wie dies in den Fig. 1 bis 7 dargestellt ist. Insbesondere kann die Wasseraustrittseinrichtung 11, bei einer im Wesentlichen runden Stauplatte 12, im Wesentlichen im Zentrum der Stauplatte 12 angeordnet sein. Dadurch kann die Fließgeschwindigkeit und der Wasserdruck des zu filternden Wassers entlang des Randes 122 der Stauplatte 12 besonders gleichmäßig verteilt sein.

Die Stauplatte 12 kann auch als Prallplatte zum bereichsweisen Abprallen des zu filternden Wassers oder als Umlenkplatte zum bereichsweisen Umlenken des zu filternden Wassers bezeichnet werden. Da die Stauplatte 12 auch eine Barriere darstellt, kann diese auch als Barriereplatte bezeichnet werden. Da die Stauplatte 12 auch eine Wasserverteilung bewirkt, kann diese ebenso als Verteilerplatte bezeichnet werden.

Die Stauplatte 12 kann aus einem wasserundurchlässig, insbesondere wasserundurchlässig bei Wasserdifferenzdrücken bis zu 10MPa zwischen der Unterseite 121 der Stauplatte 12 und der der Unterseite 121 gegenüberliegenden Oberseite der Stauplatte 12, ausgebildet sein.

Dazu kann die Stauplatte 12 als Folie mit einer Schichtdicke von 1mm bis 3mm, bevorzugt einer gewebeverstärkten Folie mit einer Schichtdicke von 1,5mm bis 3mm ausgebildet sein, wobei derart die Stauplatte 12 flexibel ausgebildet ist und lediglich durch den umgebenden Schotter der Verteilschicht 21 in Form und in Lage gehalten wird.

Besonders bevorzugt kann die Stauplatte 12 als 3mm bis 10mm dicke Platte ausgebildet sein, womit eine hohe Betriebssicherheit und eine hohe Zeitstandsfestigkeit der Stauplatte 12 gewährleistet sein kann.

Die Stauplatte 12 kann bei einer anderen vorteilhaften Ausführungsform für das Wasser semipermeabel, also halbdurchlässig, ausgebildet sein. Dabei kann - beim Fließen des Wassers - ein vorbestimmter Anteil des Wassers durch die Stauplatte 12 hindurchtreten und ein vorbestimmter Anteil des Wassers unterhalb der Stauplatte 12 entlang geleitet werden. Dazu kann die Stauplatte 12 beispielsweise als Lochplatte mit vielen Durchbruchslöchem ausgebildet sein, wobei die Durchbruchslöcher bevorzugt einen Durchmesser zwischen 0,1mm und mm aufweisen können, womit die Semipermeabilität der Stauplatte 12 einfach und kostengünstig gewährleistet werden kann.

In diesem Zusammenhang kann die Semipermeabilität der Stauplatte 12 über die Fläche dieser variieren. Dadurch kann der Wasserdurchtritt durch die Stauplatte 12 an verschiedenen Stellen der Stauplatte 12 unterschiedlich stark ausgebildet sein.

Die Stauplatte 12 kann bevorzugt aus Kunststoff ausgebildet sein, wobei eine hohe Zeitstandsfestigkeit gewährleistet sein kann.

Die Stauplatte 12 kann vorteilhafterweise auch aus einem Metall ausgebildet sein, wobei die Stauplatte dünn, also insbesondere lediglich 1mm bis 3mm dick, ausgebildet sein kann.

Die Stauplatte 12 kann von oben gesehen rund, also mit einer runden Grundfläche, ausgebildet sein, wobei die Fließgeschwindigkeit bei - von oben gesehen - mittiger Wasserzuführung, also bei einer Wasserzuführung im Zentrum der Stauplatte 12, im Bereich des Randes 122 und entlang des Randes 122 der Stauplatte 12 besonders gleichmäßig ausgebildet sein kann. Dabei kann die Stauplatte 12 mit einem Durchmesser zwischen 0,3m und 5m, insbesondere zwischen 0,9m und 3,8m, und einer Fläche zwischen 0,1m² und 20m², insbesondere zwischen 0,6m² und 11m², ausgebildet sein.

Bei einer alternativen Ausführung der Stauplatte 12 kann diese von oben gesehen sechseckig, also mit einer sechseckigen Grundfläche, ausgebildet sein, wobei bei der Herstellung der Stauplatten 12 besonders wenig Reststoff verbleibt und die Herstellung der Stauplatte 12 somit besonders kostenschonend erfolgen kann. Dabei kann die Stauplatte mit einer Fläche zwischen 0,1m² und 20m², insbesondere zwischen 0,6m² und 11m², ausgebildet sein.

Die Stauplatte 12 kann einen Durchbruch, insbesondere einen zentralen Durchbruch aufweisen, wobei an diesem Durchbruch - wie in der Fig. 1 und Fig. 3 bei den ersten und dritten bevorzugten Ausführungsformen dargestellt - ein Wasserzulauf 40 zur Wasserzuführung des zu filternden Wassers angeschlossen sein kann. Mittels dieses Durchbruchs kann das zu filternde Wasser zur Wassereinleitungsanordnung 1 von oben zugeleitet und durch die Stauplatte 12 hindurch in die Wasseraustrittseinrichtung 11 geleitet werden, wie dies in den Fig. 1 bis 7 dargestellt ist. Außerhalb dieser einen Durchbrechung kann die Stauplatte 12 bevorzugt durchbrechungsfrei ausgebildet sein, wie dies in den bevorzugten Ausführungsformen vorgesehen ist.

Die Wasseraustrittseinrichtung 11 der Wassereinleitungsanordnung 1 der ersten bevorzugten Ausführungsform ist als Rohrstück 13 mit einer Rohrwand ausgebildet, wie dies in den Fig. 1 bis 4 dargestellt ist. Das Rohrstück kann insbesondere mit einem Durchmesser von 0,04m bis 0,25m und bevorzugt mit einer Länge von 0,05m bis 0,5m ausgebildet sein. Vorteilhafterweise kann dabei das Rohrstück 13 an einer dessen Stirnseiten, also an einer von zwei Stirnseiten des Rohrstückes 13, mit dem Wasserzulauf 40 verbunden sein. Dabei kann das die andere der zwei Stirnseiten des Rohrstückes 13 mit einem Durchtritt zum Wasseraustritt versehen sein.

Bevorzugt können Durchbrüche in der Rohrwand des Rohrstücks 13 ausgebildet sein, wobei zumindest eine Mehrzahl der Durchbrüche in der Rohrwand des Rohrstücks 13 ausgebildet sein können und wobei das zu filternde Wasser zum Großteil durch die Rohrwand des Rohrstückes 13 hindurch aus der Wasseraustrittseinrichtung 11 austritt. Dadurch verteilt sich der Wasserfluss au mehrere Richtungen und es gibt kaum eine bevorzugte Fließrichtung des aus der Wasseraustrittseinrichtung 11 austretenden Wassers.

Die Stauplatte 12 kann vorzugsweise gänzlich durchbrechungsfrei ausgebildet sein, wobei die Anströmung der Stauplatte 12 mit dem zu filterndem Wasser von unterhalb der Stauplatte 12 erfolgt. Dabei kann die Wasseraustrittseinrichtung 11 beabstandet zur Stauplatte 12 ausgebildet sein, wobei das zu filternde Wasser mittels dem Wasserzulauf 40 von der Seite oder von - insbesondere im Wesentlichen senkrecht - unten zugeführt werden kann. Dabei wirken Stauplatte 12 und Wasseraustrittseinrichtung 11 weiterhin zusammen und bilden - nicht dargestellt - die Wassereinleitungsanordnung 1 einer vorteilhaften dritten und einer vorteilhaften vierten Ausfühmngsform.

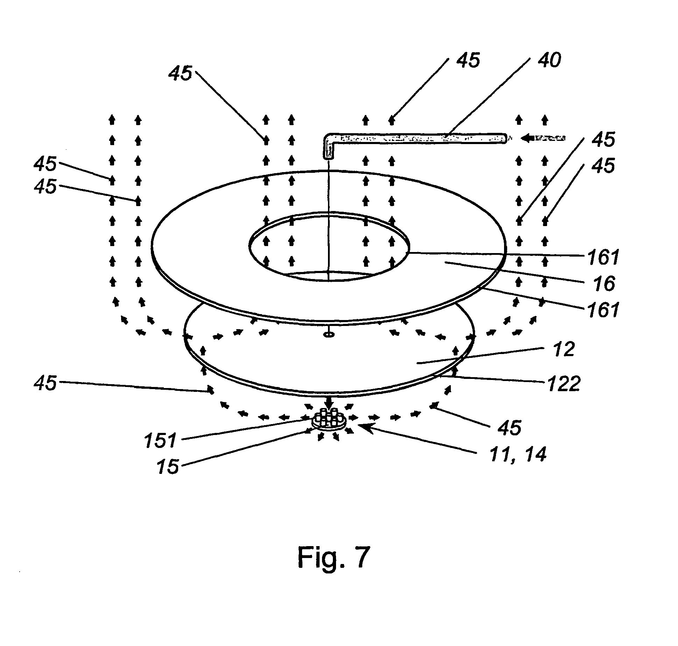

In den Fig. 5, 6 und 7 ist eine besonders bevorzugte zweite Ausführungsform der Wassereinleitungsanordnung 1 dargestellt, wobei in Fig. 5 die Wassereinleitungsanordnung 1 schematisch in einer Seitenansicht, in Fig. 6 ein Detail der Wassereinleitungsanordnung 1 in einer Seitenansicht und in Fig. 7 die Wassereinleitungsanordnung 1 als axonometrische Explosionsdarstellung dargestellt ist.

Die Wassereinleitungsanordnung 1 umfasst in der besonders bevorzugten zweiten Ausführungsform die Stauplatte 12, einen Stauring 16 und die Wasseraustrittseinrichtung 11. Dabei ist der Stauring 16 - in Betriebslage gesehen - oberhalb der Stauplatte 12, insbesondere senkrecht oberhalb des Randes 122 der Stauplatte 12, angeordnet. Dadurch kann sich das zu filternde Wasser zuerst entlang der Unterseite 121 der Stauplatte 12 verteilen und nach dem Passieren des Randes nochmalig entlang einer Unterseite des Staurings 16 verteilen. Dieses Verteilen des Wassers ist in Fig. 7 schematisch durch kleine Pfeile 45 dargestellt. Insbesondere kann vorgesehen sein, dass der Stauring 16 senkrecht oberhalb des Randes 122 der Stauplatte 12 angeordnet ist, wie dies gemäß der besonders bevorzugten zweiten Ausführungsform der Wassereinleitungsanordnung 1 vorgesehen ist. Dadurch das im Stauring 16 ein Durchbruch ausgebildet ist, kann dabei das Wasser auch durch diesen Durchbruch nach oben hin durchtreten. Dabei können mehrere, insbesondere zwei, Stauringränder 161 am Stauring 16 ausgebildet sein, womit die Gesamtrandlänge der Stauringränder 161 im Verhältnis zur Fläche besonders hoch sein kann. Dadurch kann - im Betrieb - die Fließgeschwindigkeit des Wassers entlang der Stauringränder 161 besonders gering sein, womit sich das Wasser und der Wasserdruck besonders gleichmäßig in der Verteilschicht 21 verteilen kann.

In diesem Zusammenhang kann in einer vorteilhaften Weiterbildung der Wassereinleitungsanordnung 1 der Stauring 16 auch semipermeabel ausgebildet sein, wobei der Stauring 16 zwar einen Wasserwiderstand ausbildet, jedoch auch einen Teil des Wassers durchlässt. Dazu kann der Stauring 16 beispielsweise als Lochplatte mit vielen Durchbruchslöchern ausgebildet sein, wobei die Durchbruchslöcher bevorzugt einen Durchmesser zwischen 0,1mm und 5mm aufweisen können, womit die Semipermeabilität des Staurings 16 einfach und kostengünstig gewährleistet werden kann.

In einer weiteren vorteilhaften Weiterbildung der Wassereinleitungsanordnung 1 kann diese mehrere Stauringe 16 zueinander parallel und - in Betriebslage gesehen - übereinander, also in mehreren Stockwerken angeordnet, umfassen. Dabei kann an jedem der mehreren Stauringe 16, also in jedem Stockwerk, eine Aufteilung des Wassers bewirkt werden, womit die Vergleichmäßigung der Wasserströmung auch bei einem hohen Wasserdurchsatz, beispielsweise über 30m³/h, besonders gut erfolgen kann.

Die in der Wassereinleitungsanordnung 1 der zweiten Ausführungsform ausgebildete Wasseraustrittseinrichtung 11 ist mit der Wasserzuleitung 40 wirkverbunden, wobei das Wasser im Betrieb der Wassereinleitungsanordnung 1 von oben - im Wesentlichen senkrecht - durch den Durchbruch in der Stauplatte 12 durchfließt und von oben in die Wasseraustrittseinrichtung 11 einströmt. Bei der zweiten Ausführungsform ist die Wasseraustrittseinrichtung 11 im Wesentlichen durch eine zur Stauplatte 12 beabstandete parallele Wasseraustrittsprallplatte 15 ausgebildet, wobei die Wasseraustrittsprallplatte 15 im Wesentlichen senkrecht unterhalb des Durchbruchs in der Stauplatte 12 angeordnet ist. Im Betrieb fließt das Wasser von oben, insbesondere im Wesentlichen senkrecht von oben, auf die Wasseraustrittsprallplatte 15, insbesondere im Wesentlichen normal auf die Wasseraustrittsprallplatte 15. An der Wasseraustrittsprallplatte 15 prallt das fließende Wasser ab und wird dort stark, insbesondere zur Seite hin in eine im Wesentlichen horizontale Strömungsrichtung, umgelenkt. In dieser horizontalen Strömungsrichtung fließt das Wasser entlang der Unterseite 121 der Stauplatte 12 bis zum Rand 122 der Stauplatte 12 entlang. Vorteilhafterweise kann der Abstand der Wasseraustrittsprallplatte 15 zur Stauplatte 12 zwischen 3 und 20mm, bevorzugt zwischen 4mm und 10mm, betragen. Dadurch kann das die Verteilerschicht 21 ausbildenden Materials nicht zwischen die Stauplatte 2 und die Wasseraustrittsprallplatte 15 eindringen, womit eine Verstopfung der Wassereinleitungsanordnung 1 zuverlässig verhindert sein kann.

Die derart ausgebildete Wasseraustrittseinrichtung 11 kann aufgrund der starken Umlenkung des Wassers bei dessen Einleitung in die Verteilschicht 21 als Umlenkaustrittseinrichtung 14 bezeichnet werden. Die derart als Umlenkaustrittseinrichtung 14 ausgebildete Wasseraustrittseinrichtung 11 kann besonders nahe zu einer Bodenfläche des Bodenfilterbereichs 6 angeordnet werden, womit die Verteilschicht 21 des Bodenfilters 2 mit geringer Schichtdicke, also mit geringer Höhenerstreckung, ausgebildet werden kann. Dadurch kann die Gesamthöhe des Bodenfilters 2 verringert werden.

Die Umlenkaustrittseinrichtung 14 ist im Detail in Fig. 6 dargestellt, wobei die Umlenkaustrittseinrichtung 14 im Wesentlichen die Wasseraustrittsprallplatte 15 und mehrere Abstandhalter 151 umfasst. Durch die Abstandhalter 151 kann die Wasseraustrittsprallplatte 15 mit vorbestimmten Abstand parallel unterhalb zur Stauplatte 12 angeordnet werden. Derart kann eine vorbestimmte und exakte Relativpositionierung zur Stauplatte 12 gewährleistet sein. Dabei kann die Wasseraustrittsprallplatte 15 mit der Stauplatte 12 verschraubt und/oder verklebt sein.

Die Umlenkaustrittseinrichtung 14 kann anstatt des Rohrstücks 13 auch bei der ersten Ausführungsform der Wassereinleitungsanordnung 1 ausgebildet sein. Ebenso kann das Rohrstück 13 anstatt der Umlenkaustrittseinrichtung 14 bei der zweiten Ausführungsform der Wassereinleitungsanordnung 1 ausgebildet sein.

Die Fläche der Stauplatte 12 kann vorteilhafterweise zwischen 5 Prozent und 30 Prozent, vorteilhafterweise zwischen 10 Prozent und 20 Prozent, der Oberfläche 28 des Bodenfilters 2 betragen, womit ebenso eine besonders gleichmäßige Durchströmung der Filterschicht 23 gewährleistet sein kann. Im Feldversuch hat sich dieses Verhältnis der Fläche der Stauplatte 12 zur Fläche der Oberfläche 28 als Vorteilhaft erwiesen, wobei die besonders gleichmäßige und im Wesentlichen senkrechte Durchströmung der Filterschicht 23 gewährleistet sein kann. Bei großen Bodenfilterbereichen 6, insbesondere wenn die Oberfläche 28 des Bodenfilters 2 größer als 20m² ausgebildet ist, können mehrere Wassereinleitungsanordnungen 1 nebeneinander, insbesondere im Wesentlichen gleichmäßig verteilt, angeordnet sein, wodurch der Bodenfilterbereich 6 in mehrere Teilbereiche und die Oberfläche 28 in mehrere Teiloberflächen aufgeteilt sind. Die Anzahl der Teilbereiche bzw. der Teiloberflächen entspricht dabei der Anzahl der im Bodenfilterbereich 6 angeordneten Wassereinleitungsanordnungen 1. Dabei kann in vorteilhafter Weise jede der mehreren Stauplatten 12 zwischen 5 Prozent und 30 Prozent, vorzugsweise zwischen 10 Prozent und 20 Prozent, der Fläche der Teiloberfläche betragen. Insbesondere kann die Gesamtfläche der mehreren Stauplatten 12 zwischen 5 Prozent und 30 Prozent, vorzugsweise zwischen 10 Prozent und 20 Prozent, der Fläche der Oberfläche 28 betragen.

Bei mehreren in der Verteilschicht 21 des Bodenfilters 2 angeordneten Wassereinleitungsanordnungen 1 können diese beanstandet zueinander auf - in Betriebslage gesehen - im Wesentlichen gleicher Höhe angeordnet sein.

Vorteilhafterweise kann die Stauplatte 12 zwischen 10cm und 30cm beabstandet zur Filterschicht 23, also zur unteren Grenzschicht der Filterschicht 23, in der Verteilschicht 21 angeordnet sein. Dadurch kann sich oberhalb der Stauplatte 12 - räumlich gesehen - ein gleichmäßiger Wasserdruck ausbilden und somit an der unteren Grenzschicht der Filterschicht 23 ein besonders gleichmäßiger Wasserdruck anliegen.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Wassereinleitungsanordnung (1) zur Wassereinleitung von zu filterndem Wasser in einen Bodenfilter (2) einer Gewässeranordnung mit einem Nutzbereich (3) und einem den Bodenfilter (2) umfassenden Bodenfilterbereich (6), wobei der Bodenfilter (2) zur Seite und nach unten abdichtet, wobei die Wassereinleitungsanordnung (1) mit einer Wasseraustrittseinrichtung (11) ausgebildet ist, und wobei die Wasseraustrittseinrichtung (11) zumindest einen Durchbruch zur Einleitung zu filternden Wassers in eine Verteilschicht (21) des Bodenfilters (2) aufweist, **dadurch gekennzeichnet, dass** die Wassereinleitungsanordnung (1) eine Stauplatte (12) zum wenigstens bereichsweisen Umlenken des aus der Wasseraustrittseinrichtung (11) austretenden und zu filternden Wassers umfasst.

2. Wassereinleitungsanordnung nach Anspruch 1, dadurch gekennzeichet, dass die Stauplatte (12) derart angeordnet ist, dass das an der Wasseraustrittseinrichtung (11) austretende zu filternde Wasser wenigstens bereichsweise entlang einer Unterseite (121) der Stauplatte (12) fließt

3. Wassereinleitungsanordnung nach Anspruch 1 oder 2, **dadurch gekennzeichnet, dass** die Stauplatte (12) - in Betriebslage der Wassereinleitungsanordnung (1) gesehen - oberhalb der Wasseraustrittseinrichtung (11) im Wesentlichen waagerecht angeordnet ist.

4. Wassereinleitungsanordnung nach Anspruch 1, 2 oder 3, **dadurch gekennzeichnet, dass** - in Betriebslage der Wassereinleitungsanordnung (1) gesehen - die Wasseraustrittseinrichtung (11) im Wesentlichen senkrecht unterhalb der Stauplatte (12) angeordnet ist.

5. Wassereinleitungsanordnung nach Anspruch 1, 2, 3 oder 4, **dadurch gekennzeichnet, dass** - in Betriebslage der Wassereinleitungsanordnung (1) gesehen - der Schwerpunkt der Stauplatte (12) senkrecht oberhalb der Wasseraustrittseinrichtung (11) angeordnet ist.

6. Wassereinleitungsanordnung nach einem der Ansprüche 1 bis 5, **dadurch gekennzeichnet, dass** die Fläche der Stauplatte (12) zwischen fünf Prozent und 30 Prozent, vorteilhafterweise zwischen zehn Prozent und 20 Prozent, einer Fläche einer Oberfläche (28) des Bodenfilters (2) betragen kann.

7. Wassereinleitungsanordnung nach einem der Ansprüche 1 bis 6, **dadurch gekennzeichnet, dass** die Stauplatte (12) eine runde Grundfläche aufweist.

8. Wassereinleitungsanordnung nach einem der Ansprüche 1 bis 7, **dadurch gekennzeichnet, dass** die Wassereinleitungsanordnung (1) einen Stauring 16 umfasst, und dass der Stauring (16) - in Betriebslage gesehen - oberhalb der Stauplatte 12 angeordnet ist.

9. Wassereinleitungsanordnung nach einem der Ansprüche 1 bis 8, **dadurch gekennzeichnet, dass** die Wasseraustrittseinrichtung (11) im Wesentlichen durch eine zur Stauplatte (12) beabstandete parallele Wasseraustrittsprallplatte (15) ausgebildet ist, wobei die Wasseraustrittsprallplatte (15) - in Betriebslage gesehen - im Wesentlichen senkrecht unterhalb eines Durchbruchs in der Stauplatte (12) angeordnet ist

10. Wassereinleitungsanordnung nach Anspruch 9, **dadurch gekennzeichnet, dass** der Abstand der Wasseraustrittsprallplatte (15) zur Stauplatte 12 zwischen 3 und 20mm beträgt.

11. Wassereinleitungsanordnung nach einem der Ansprüche 1 bis 10, **dadurch gekennzeichnet, dass** die Wasseraustrittseinrichtung (11) als Rohrstück (13) ausgebildet ist.

12. Wassereinleitungsanordnung nach Anspruch 11, **dadurch gekennzeichnet, dass** das Rohrstück (13) an einer dessen Stirnseiten mit einem Wasserzulauf (40) verbunden ist.

13. Wassereinleitungsanordnung nach Anspruch 11 oder 12, **dadurch gekennzeichnet, dass** zumindest eine Mehrzahl der Durchbrüche in einer Rohrwand des Rohrstücks (13) ausgebildet sind.

14. Bodenfilterbereich (6) einer Gewässeranordnung umfassend einen Bodenfilter (2) mit einer Verteilschicht (21) und einer Filterschicht (23), wobei - in Betriebslage der Gewässeranordnung - die Verteilschicht (21) unterhalb der Filterschicht (23) angeordnet ist, **dadurch gekennzeichnet, dass** in der Verteilschicht (21) zumindest eine Wassereinleitungsanordnung (1) nach einem der Ansprüche 1 bis 13 ausgebildet ist.

15. Verfahren zur Wassereinleitung von zu filterndem Wasser einer Gewässeranordnung mit einem Nutzbereich (3) und einem einen Bodenfilter (2) umfassenden Bodenfilterbereich (6), **dadurch gekennzeichnet, dass** aus dem Nutzbereich (3) zu filterndes Wasser abgesaugt und in eine Verteilschicht (21) des Bodenfilters (2) im Bereich einer Wasseraustrittseinrichtung (11) einer Wassereinleitungsanordnung (1) unterhalb einer Stauplatte (12) eingeleitet wird, dass zur Verhinderung des unmittelbaren Aufsteigens des zu filternden Wassers in Richtung einer - in Betriebslage des Bodenfilters (2) gesehen oberhalb der Verteilschicht (21) angeordneten - Filterschicht (23) des Bodenfilters (2) das zu filternde Wasser an einer Unterseite (121) der Stauplatte (12) in Richtung zu einem Rand (122) der Stauplatte (12) geleitet wird, dass das zu filternde Wasser ausgehend vom Rand (122) der Stauplatte (12) zur Filterschicht (23) des Bodenfilters (2) geleitet und beim Durchtritt durch die Filterschicht (23) des Bodenfilters gereinigt wird und an einer Oberfläche (28) des Bodenfilters (2) als Reinwasser (61) aus dem Bodenfilters (2) austritt und zurück in den Nutzbereich (3) geleitet wird.

## Claims

1. A water introducing arrangement (1) for introducing water to be filtered into a soil filter (2) of a water body arrangement, comprising a useful zone (3) and a soil filter zone (2) comprising the soil filter (2), with the soil filter (2) sealing towards the side and the bottom, with the water introducing arrangement (1) comprising a water outlet device (11), and the water outlet device (11) having at least one breakthrough for introducing water to be filtered into a distribution layer (21) of the soil filter (2), **characterized in that** the water introducing arrangement (1) comprises a baffle plate (12) for deflecting water at least in part which is discharged from the water outlet device (11) and is to be filtered.

2. A water introducing arrangement according to claim 1, **characterized in that** the baffle plate (12) is arranged in such a way that the water which is to be filtered and exits at the water outlet device (11) flows at least in part along a bottom side (121) of the baffle plate (12).

3. A water introducing arrangement according to claim 1 or 2, **characterized in that** the baffle plate (12) is arranged substantially horizontally above the water outlet device (11), as seen in the operating position of the water introducing arrangement (1).

4. A water introducing arrangement according to claim 1, 2 or 3, **characterized in that** water outlet device (11) is arranged substantially perpendicularly beneath the baffle plate (12), as seen in the operating position of the water introducing arrangement (1).

5. A water introducing arrangement according to claim 1, 2, 3 or 4, **characterized in that** the center of gravity of the baffle plate (12) is arranged substantially perpendicularly above the water introducing arrangement (1), as seen in the operating position of the water introducing arrangement (1).

6. A water introducing arrangement according to one of the claims 1 to 5, **characterized in that** the area of the baffle plate (12) is between 5 percent and 30 percent, advantageously between 10 percent and 20 percent, of an area of a surface (28) of the soil filter (2)

7. A water introducing arrangement according to one of the claims 1 to 6, **characterized in that** the baffle plate (12) has a round base.

8. A water introducing arrangement according to one of the claims 1 to 7, **characterized in that** the water introducing arrangement (1) comprises a retaining ring (16), and that the retaining ring (16) is arranged above the baffle plate (12), as seen in operating position.

9. A water introducing arrangement according to one of the claims 1 to 8, **characterized in that** the water outlet device (11) is substantially formed by a parallel water outlet baffle plate (15) which is spaced from the baffle plate (12), with the water outlet baffle plate (15) being arranged substantially perpendicularly beneath a breakthrough in the baffle plate (12), as seen in the operating position.

10. A water introducing arrangement according to claim 9, **characterized in that** the distance of the water outlet baffle plate (15) from the baffle plate (12) is between 3 and 20 mm.

11. A water introducing arrangement according to one of the claims 1 to 10, **characterized in that** the water outlet device (11) is arranged as a tube section (13).

12. A water introducing arrangement according to claim 11, **characterized in that** the tube section (13) is connected at one of its face sides with a water inlet (40).

13. A water introducing arrangement according to claim 11 or 12, **characterized in that** at least a plurality of the breakthroughs is arranged in a wall of the tube section (13).

14. A soil filter area (6) of a water body arrangement, comprising a soil filter (2) with a distribution layer (21) and a filter layer (23), with the distribution layer (21) being arranged beneath the filter layer (23) as seen in the operating position of the water body arrangement, **characterized in that** at least one water introducing arrangement (1) according to one of the claims 1 to 13 is arranged in the distribution layer (21).

15. A method for introducing water of a water body arrangement to be filtered, comprising a useful zone (3) and a soil filter zone (6) comprising a soil filter (2), **characterized in that** water to be filtered is sucked off from the useful zone (3) and is introduced into a distribution layer (21) of the soil filter (2) in the region of a water outlet device (11) of a water introducing arrangement (1) beneath a baffle plate (12), and that for preventing the direct rising of the water to be filtered in the direction of filter layer (23) of the soil filter (2) arranged above the distribution layer (21) as seen in the operating position of the soil filter (2) the water to be filtered is guided on a bottom side (121) of the baffle plate (12) in the direction towards an edge (122) of the baffle plate (12), that the water to be filtered is guided to the filter layer (23) of the soil filter (2) starting from the edge (122) of the baffle plate (12) and is purified when passing through the filter layer (23) of the soil filter, and exits at a surface (28) of the soil filter (2) as clean water (61) from the soil filter (2) and is guided back into the useful zone (3).

## Revendications

1. Installation d'arrivée d'eau (1) pour amener de l'eau à filtrer dans un filtre de fond (2) d'une installation aquatique avec une zone utile (3) et une zone de filtre de fond (6) comprenant le filtre de fond (2), dans laquelle le filtre de fond (2) est étanche sur le côté et le bas, dans laquelle l'installation d'arrivée d'eau (1) est munie d'un dispositif de sortie d'eau (11) et dans laquelle le dispositif de sortie d'eau (11) présente au moins une ouverture pour amener de l'eau à filtrer dans une couche de distribution (21) du filtre de fond (2), **caractérisée en ce que** l'installation d'arrivée d'eau (1) comprend une plaque de retenue (12) pour dévier au moins en partie l'eau à filtrer sortant du dispositif de sortie d'eau (11).

2. Installation d'arrivée d'eau selon la revendication 1, **caractérisée en ce que** la plaque de retenue (12) est disposée de telle manière que l'eau à filtrer sortant au niveau du dispositif de sortie d'eau (11) s'écoule au moins en partie le long d'une face inférieure (121) de la plaque de retenue (12).

3. Installation d'arrivée d'eau selon la revendication 1 ou 2, **caractérisée en ce que** la plaque de retenue (12), vue dans la position de fonctionnement de l'installation d'arrivée d'eau (1), est disposée de façon sensiblement horizontale au-dessus du dispositif de sortie d'eau (11).

4. Installation d'arrivée d'eau selon la revendication 1, 2 ou 3, **caractérisée en ce que**, vu dans la position de fonctionnement de l'installation d'arrivée d'eau (1), le dispositif de sortie d'eau (11) est disposé de façon sensiblement verticale en dessous de la plaque de retenue (12).

5. Installation d'arrivée d'eau selon la revendication 1, 2, 3 ou 4, **caractérisée en ce que**, vu dans la position de fonctionnement de l'installation d'arrivée d'eau (1), le centre de gravité de la plaque de retenue (12) est disposé verticalement au-dessus du dispositif de sortie d'eau (11).

6. Installation d'arrivée d'eau selon l'une des revendications 1 à 5, **caractérisée en ce que** la superficie de la plaque de retenue (12) peut représenter entre 5 % et 30 %, de préférence entre 10 % et 20 % d'une superficie d'une surface (28) du filtre de fond (2).

7. Installation d'arrivée d'eau selon l'une des revendications 1 à 6, **caractérisée en ce que** la plaque de retenue (12) a une surface en plan ronde.

8. Installation d'arrivée d'eau selon l'une des revendications 1 à 7, **caractérisée en ce que** l'installation d'arrivée d'eau (1) comprend un vanneau de retenue (16) et **en ce que** l'anneau de retenue (16), vu dans la position de fonctionnement, est disposé au-dessus de la plaque de retenue (12).

9. Installation d'arrivée d'eau selon l'une des revendications 1 à 8, **caractérisée en ce que** le dispositif de sortie d'eau (11) est formé pour l'essentiel par une chicane (15) parallèle à distance de la plaque de retenue (12), la chicane (15) étant disposée, vue dans la position de fonctionnement, de manière sensiblement verticale derrière une ouverture dans la plaque de retenue (12).

10. Installation d'arrivée d'eau selon la revendication 9, **caractérisée en ce que** la distance entre la chicane (15) et la plaque de retenue (12) est comprise entre 3 mm et 20 mm

11. Installation d'arrivée d'eau selon l'une des revendications 1 à 10, **caractérisée en ce que** le dispositif de sortie d'eau (11) est conforme comme un tuyau (13).

12. Installation d'arrivée d'eau selon la revendication 11, **caractérisée en ce que** le tuyau (13) est reliée à une de ses faces d'extrémité avec une arrivée d'eau (40).

13. Installation d'arrivée d'eau selon l'une des revendications selon la revendication 11 ou 12, **caractérisée en ce qu'**au moins plusieurs des ouvertures sont formées dans une paroi tubulaire du tuyau (13)

14. Zone de filtre de fond (6) d'une installation aquatique comprenant un filtre de fond (2) avec une couche de distribution (21) et une couche filtrante (23), dans laquelle, dans la position de fonctionnement de l'installation aquatique, la couche de distribution (21) est disposée en dessous de la couche filtrante (23), **caractérisée en ce qu'**au moins une installation d'arrivée d'eau (1) selon l'une des revendications 1 à 13 est formée dans la couche de distribution (21).

15. Procédé pour amener de l'eau filtrée à une installation aquatique avec une zone utile (3) et une zone de filtre de fond (6) comprenant un filtre de fond (2), **caractérisé en ce que** de l'eau à filtrer est aspirée à partir de la zone utile (3) et introduite dans une couche de distribution (21) du filtre de fond (2) au niveau d'un dispositif de sortie d'eau (11) d'une installation d'arrivée d'eau (1) en dessous d'une plaque de retenue (12), **en ce que** pour empêcher la remontée directe de l'eau à filtrer en direction d'une couche filtrante (23) du filtre de fond (2) située au-dessus de la couche de distribution (21) dans la position de fonctionnement du filtre de fond (2), l'eau à filtrer est amenée sur une face inférieure (121) de la plaque de retenue (12) en direction d'un bord (122) de la plaque de retenue (12), **en ce que** l'eau filtrée est acheminée à partir du bord (122) de la plaque de retenue (12) en direction de la couche filtrante (23) du filtre de fond (2) et est purifiée en traversant la couche filtrante (23) du filtre de fond et sort du filtre de fond (2) sur une surface (28) du filtre de fond sous forme d'eau purifiée (61) pour revenir à la zone utile (3).
